Europäisches Patentamt

**European Patent Office**

Office européen des brevets

(19)

(11) Publication number: **0 075 443**
**B1**

(12) **EUROPEAN PATENT SPECIFICATION**

(45) Date of publication of patent specification: **26.11.86**

(51) Int. Cl.⁴: **A 23 G 3/00, A 23 G 3/02**

(21) Application number: **82304875.6**

(22) Date of filing: **16.09.82**

(54) **A chewable comestible product and process for its production.**

(30) Priority: **17.09.81 US 303268**

(43) Date of publication of application:
**30.03.83 Bulletin 83/13**

(45) Publication of the grant of the patent:
**26.11.86 Bulletin 86/48**

(84) Designated Contracting States:
**BE CH DE FR GB IT LI NL**

(56) References cited:
**GB-A-2 000 673**
**US-A-2 522 050**
**US-A-2 588 419**
**US-A-2 847 311**
**US-A-3 586 513**
**US-A-3 687 690**
**US-A-4 251 561**
**US-A-4 323 588**

**JOURN. AMER. OIL CHEM., vol. 56, no. 3, March 1979, pages 350-352, J.W. MANSVELT: "Technical application of protein whipping agents in sugar confectionery"**

(73) Proprietor: **WARNER-LAMBERT COMPANY**
**201 Tabor Road**
**Morris Plains New Jersey 07950 (US)**

(72) Inventor: **Becker, Amy J.**
**200 East 84th St.**
**New York New York (US)**
Inventor: **Medri, Mario W.**
**43 Windmill Drive**
**Huntington Long Island New York (US)**
Inventor: **Abbrazia, Leonard P.**
**1081 East 31st St.**
**Brooklyn New York (US)**

(74) Representative: **Jones, Michael Raymond et al HASELTINE LAKE & CO. Hazlitt House 28 Southampton Buildings Chancery Lane London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the invention
Field of the invention

The present invention relates to chewable edible products, and particularly to such products as may be prepared into candy, or utilized as a base for the delivery of medicaments and the like.

Description of the prior art

The present invention relates to the area of chewable comestibles having as part of their utility the ability to be prepared as confectionery products. The preparation of confectionery comestibles is historically well known and has changed very little through the years. In this regard, confectionery items have been classified as either of the "hard" type, or of the soft variety. The present invention relates primarily to this latter type of confection.

The preparation of soft confections such as nougat, involves the combination of two primary components thereof, namely a high boiling syrup such as corn syrup or the like, and a relatively light textured frappé, generally prepared from gelatin, egg albumen, milk proteins such as casein, and vegetable proteins such as soy protein, and the like. The frappé is generally relatively light, and may, for example, range in specific gravity from about 0.5 to about 0.7, although United States Patent No. 3586513 disclosed a denser confectionery product which can be in the form of a nougat.

By comparison, the high boiled syrup, or "bob syrup", is relatively viscous and possesses a higher density, and frequently contains a substantial amount of sugar. Conventionally, the final nougat composition is prepared by the addition of the "bob syrup" to the frappé under agitation, to form the basic nougat mixture. Further ingredients such as flavorings, oils, additional sugar and the like may be added thereafter also under agitation. A general discussion of the composition and preparation of nougat confections may be found in B. W. Minifie, *Chocolate, Cocoa and Confectionery*: Science and Technology, 2nd Edition, AVI Publishing Co., Inc., Westport, Connecticut, (1980), at Pages 424—425.

Various confections have been considered for a variety of differing utilities, such as the development of products containing medicaments and other additives. Conventionally, hard candies have been utilized for such purposes, as they are, by their composition, easier and less expensive to process. By contrast, the soft candy or nougat possesses the shortcoming of being difficult to process except under conditions of elevated temperature, as the prepared product exhibits insufficient integrity at lower temperatures, to undergo the conventional processing utilized for hard candy. For this reason, the preparation of nougat has defied adaptation to the less expensive and more commercially desirable processing techniques utilized with hard candy.

One of the possible applications of confections is their employment as a vehicle for the delivery of medicaments. In particular, the preparation of antacid products in solid form for oral administration, has received wide attention. Specifically many of the products presently commercially available employ candy bases that are primarily of the hard candy variety that are nonetheless to be ingested by chewing. Most of these products, when placed in the mouth and chewed, however, cause a plating of the antacid over the mouth that results in the sensation of a chalky taste to the user. Efforts have therefore been directed to the development of chewable antacid products that either reduce or completely eliminate the chalky aftertaste.

It would therefore be desirable to develop a chewable confection, and a related method of preparation that would enable such confection to be processed in the same manner and with the same apparatus utilized for hard candy. It would also be desirable to develop a chewable confection that may serve as an effective base for the incorporation of medicaments such as antacids, that would substantially reduce or eliminate the chalky aftertaste experienced by the user when the product is chewed and swallowed.

Summary of the invention

The present invention relates to a chewable comestible product comprising (1) from 10% to 38.2% by weight of a frappé component having a specific gravity of at least 1.0, and (2) a syrup component including corn syrup, and at least one material selected from sugar, starch, water, and mixture thereof present in an amount constituting at least the majority of the remainder of the comestible product. The frappé component comprises the following ingredients, all present in amounts by weight of the frappé component:

at least one whipping agent, in an amount of from 1.0% to 12%;
corn syrup in an amount of up to 92%;
sugar in an amount of up to 55%;
water in an amount of from 4% to 45%; and
an antacid compound in an amount of from 30 to 55%.

The comestible product of the present invention may further include a material selected from colorants, flavorings, oils, preservatives, medicaments, and mixtures thereof. Preferably, the antacid is present in the comestible product in an amount of up to 20% by weight of the product. The antacid may be selected from hydroxymagnesium aluminum sulfate, dialuminum sodium carbonate, calcium carbonate, sodium bicarbonate, aluminum hydroxide, magnesium hydroxide, magnesium carbonate, a co-dried gel of

2

aluminum hydroxide and magnesium carbonate, and mixtures thereof. Preferably, the antacid comprises the co-dried gel of aluminum hydroxide and magnesium carbonate:

The present invention also relates to a method for the preparation of the comestible product described above, which comprises preparing a frappé component including the ingredients stated above, preparing the syrup component as defined above, slowly adding to the frappé component the syrup component under agitation and at an elevated temperature of at least 79.4°C (175°F), mixing the two components at a temperature of at least 76.6°C (170°F), cooling the resulting mixture and kneading same at a temperature of no higher than about 54°C (130°F), and forming the resulting mixture into the final comestible product.

It has surprisingly been found that, as the antacid is fully dispersed in the frappé component, the antacid does not yield the chalky aftertaste when chewed and ingested. The incorporation of the antacid in particulate form, with particles ranging up to about 1.5 μm (microns) in size, within the frappé results in a homogeneous mixture of the antacid and a full coating of the particles thereof, that averts the development of the chalkiness in the mouth.

A further feature of the present invention is that the method may be performed at lower temperatures, and, in particular, that the final forming of the comestible product may take place at temperatures and in machinery utilized for hard candy cold processing. The present compositions maintain their integrity through cold processing and do not present unwanted adhesion to the processing machinery.

Accordingly, the present invention provides a chewable comestible product capable of forming a soft candy such as a nougat, which does not require final forming at elevated temperatures.

The present invention provides a chewable comestible product as aforesaid, which includes a frappé component having specific gravity of at least 1.0, preferably from 1.0 to 1.6.

The present invention provides a chewable comestible product as aforesaid that is capable of holding an antacid compound, and delivering said antacid without imparting chalky aftertaste to the user.

The present invention provides a method for the preparation of a chewable comestible product which does not require final forming at elevated temperatures.

The present invention provides a method as aforesaid which facilitates the full dispersion of an antacid therewithin by incorporating said antacid into the frappé component thereof.

Suitable whipping agents may include egg albumen, gelatin, milk proteins or other milk derived compounds such as whey, and a casein derivative known as "Hyfoama", vegetable proteins such as soy derived compounds, and mixtures thereof.

The sugar component, while listed separately, actually includes corn syrup as a source thereof, and may be used in alternation therewith. In particular, corn syrup may be used alone, or a variety of sugars may be used in its place; namely, invert sugar, fine granular sugar, liquid sugar, and the like. The exact choice of the sugar component may vary with the texture and ultimate utility of the comestible product to be prepared. The syrup component is known in the art as "bob syrup" and is generally a conventional ingredient in the formation of nougat.

The frappé, in addition to the foregoing materials, may also include other additives comprising materials such as colorants, flavorings, and various medicaments. A feature of the method of the present invention, discussed later herein, comprises the incorporation into the frappé of certain medicaments, with the result that the medicaments are uniformly and thoroughly dispersed therein, and a more palatable delivery system for the medicament is thus attained.

The antacid compounds are incorporated into the present comestible products in particulate form, with particle sizes preferably ranging from 1.0 to 1.5 μm (microns). Commercially obtainable antacid is classified according to its particle size in the following manner; "heavy" calcium carbonate, for example, possesses a particle size of about 1.5 μm (microns), while "extra light" calcium carbonate may possess a particle size of 1.0 μm (microns). This standard may be utilized in assessing the desirable particle size for any of the aforementioned antacid compounds.

Preferably the frappé component comprises the following ingredients, expressed in percent by weight of the frappé component:

whipping agent, in from 1.0% to 9%;
corn syrup, up to 80%;
sugar, up to 40%;
water, from 4% to 25%;
antacid from 30% to 55%.

The syrup component of the present comestible product is generally prepared from corn syrup, and may include other materials, as noted above. The syrup component or "bob syrup" generally comprises substantially the remainder of the chewable comestible product, and preferably may range in amount from 60% to 85% by weight of the total product.

The corn syrup ingredient is generally present in the bob syrup in an amount by weight ranging from about 20% to about 55%, and preferably from about 25% to 50% by weight thereof. The corn syrup ingredient includes those corn syrups high in fructose, as well as other commercially available varieties thereof.

The sugar present in the bob syrup may be one of the varieties recited above with respect to the frappé component, and may be present in the bob syrup in an amount of from about 45% to about 80% by weight, and more preferably in an amount of from 45% to about 75% by weight.

3

A further component of the bob syrup comprises starch. While not mandatory, starch may be included, and starches useful in accordance herewith may comprise those known as the "thin" boiling types. The starch component, when present, is utilized in an amount by weight of the bob syrup, of up to about 7% by weight, and preferably from about 3% to about 4% by weight thereof.

The remainder of the bob syrup may comprise water, which may be present in an amount of up to about 13% by weight of the bob syrup.

In addition to the frappé component and the syrup component, the chewable comestible products of the present invention may include further additives utilized conventionally to prepare nougat products, as well as additional materials that are capable of being incorporated therein for specific applications. Thus, the present comestible products may include materials selected from pigments, colorants, oils, fats, preservatives, flavorings, and mixtures of these in varying amounts.

Those materials generally incorporated and desirable to aid in the final processing of the comestible products, include the fats, preservatives, colorants and flavorings. Suitable oils and fats would include partially hydrogenated vegetable or animal fats, such as coconut oil, palm kernel oil, beef tallow, lard, and the like. These ingredients are generally utilized in amounts with respect to the comestible product of up to about 7.0% by weight, and preferably up to about 3.5% by weight of the final product.

In a preferred embodiment, the fats and oils component of the present invention may comprise palm kernel oil and glycerol monostearate. These materials are added to the mixture of the frappé component and the syrup component, frequently in combination with a preservative such as BHA or BHT, and an auxiliary sweetener, and the like.

The comestible products of the present invention may be prepared to offer a variety of chewing textures to suit particular applications. Thus, for example, the product when prepared with the ingredients disclosed above may provide an extended chew similar to taffy candy. If it is desired to prepare a product having a "shorter" chew, a graining promoter such as 6x sugar or the like may be added in small amounts, on the order of about 0.5% by weight of the total product. Naturally, the presence, amount and manner of addition of such graining promoter may vary within the skill of the art, within the scope of the present invention.

In the instance where auxiliary sweeteners are utilized, the present invention contemplates the inclusion of those sweeteners well known in the art, including both natural and artificial sweeteners. Thus, additional sweeteners may be chosen from the following non-limiting list: sugars such as sucrose, glucose (corn syrup), dextrose, invert sugar, fructose, and mixtures thereof; saccharine and its various salts such as the sodium or calcium salt; cyclamic acid and its various salts such as the sodium salt; the dipeptide sweeteners such as aspartame; dihydrochalcone; glycyrrhizin; *Stevia rebaudiana* (Stevioside); and sugar alcohols such as sorbitol, sorbitol syrup, mannitol, xylitol, and the like. Also contemplated as an additional sweetener is the non-fermentable sugar substitute (hydrogenated starch hydrolysate) which is described in U.S. reissue patent 26,959. Also contemplated is the synthetic sweetener 3,6 - dihydro - 6 - methyl - 1,2,3 - oxathiazin - 4 - one - 2,2 - dioxide particularly the potassium, sodium and calcium salts thereof as described in German Patent No. 2,001,017.7.

Suitable flavorings include both natural and artificial flavors, and mints such as peppermint, menthol, artificial vanilla, cinnamon, various fruit flavors, both individual and mixed, and the like are contemplated. The flavorings are generally utilized in amounts that will vary depending upon the individual flavor, and may, for example, range up to 1% by weight or higher.

The colorants useful in the present invention, include the pigments such as titanium dioxide, that are incorporated directly into the frappé and may be incorporated therein in amounts of up to about 1% by weight, and preferably up to about .6% by weight. Also, the colorants may include other dyes suitable for food, drug and cosmetic applications, and known as F. D. & C. dyes and lakes. The materials acceptable for the foregoing spectrum of use are preferably water-soluble, and include indigoid dye, known as F. D. & C. Blue No. 2, which is the disodium salt of 5,5'-indigotindisulfonic acid. Similarly, the dye known as F. D. & C. Green No. 1, comprises a triphenylmethane dye and is the monosodium salt of 4 - [4 - (Nethyl - p - sulfobenzylamino)diphenylmethylene] - [1 - (N - ethyl - N - p - sulfoniumbenzyl) - $\Delta^{2,5}$ - cyclohexadienimine]. A full recitation of all F. D. & C. and D. & C. and their corresponding chemical structures may be found in the Kirk-Othmer Encyclopedia of Chemical Technology, at Volume 5, Pages 857—884, which text is accordingly incorporated herein by reference.

The method of the present invention comprises the preparation of the chewable comestible food product by a series of steps, of which the first is the preparation of the frappé component to a specific gravity of at least 1.0, thereafter preparing the syrup component and slowly adding the syrup component to the frappé component under agitation and at a temperature of at least 79.4°C (175°F). The frappé component and the syrup component are thereafter mixed at a temperature of at least 76.6°C (170°F) for a period of time to form a uniform mixture, after which the mixture is cooled to a temperature no higher than about 54°C (130°F), and the thus cooled mixture is thereafter formed into the comestible product, preferably having a specific gravity of from 1.1 to 1.6.

The first step, comprising the preparation of the frappé component, proceeds by the mixture with each of the ingredients of the frappé component. In particular, the whipping agent is combined with a portion of the corn syrup or the sugar ingredient, whichever is utilized, and water, and is mixed for a period of time sufficient to form a hydrated mixture. Generally, these materials are mixed by agitation or whipping with a

4

whisk, for a period of time on the order of about 10 minutes, which has been found to be sufficient to permit the formation of the desired hydrated mixture.

Thereafter, the remainder of the corn syrup, sugar, if any, and water is added to the above mixture. This last addition is initially brought to a temperature on the order of about 99°C (210°F) after which it is added to the remaining mixture.

To include the antacid, the remainder of the corn syrup or the like and the medicament are added after the initial combination of the whipping agent, corn syrup, sugar and water. These ingredients are added alternately to the initial mixture until fully incorporated in the resulting frappé component.

The syrup component or "bob syrup" is prepared by initially mixing the starch, when included, with 1/2 of the total amount of water to be utilized in the syrup component. Upon the formation of this first mixture, the remainder of the ingredients of the syrup component, i.e. the corn syrup, sugar and the starch/water mixture, are charged into a pressure cooker and cooked for about 10 minutes to a temperature ranging from about 126.7°C (260°F) to about 137.7°C (280°F), and then a vacuum of approximately 25.4 cm (10 inches) is applied. The vacuum is applied to assist in removing further moisture from the mixture.

Once the above steps are complete, the frappé component and the syrup component or "bob syrup" may be combined, usually by the addition to the frappé component of the syrup component with agitation. In the instance where a colorant as mentioned above is to be added to the comestible product, such colorant is preferably added to the frappé prior to its combination with the syrup component.

The syrup component is added to the frappé component gradually and with agitation. The addition of the syrup component may be conducted over a period on the order of about 7 minutes, and may take place at a temperature of at least 79.4°C (175°F), and preferably at a temperature ranging from about 90.5°C (195°F) to about 93.3°C (200°F). Thereafter, the resulting mixture may be beaten at a greater speed and intensity until the temperature of the resulting mixture drops to about 87.7°C (190°F). At this point, any fats or oils to be added to the mixture may be liquified and added, and the mixture may be beaten for a further period of time until the temperature thereof drops to about 82.2°C (180°F)—83.3°C (185°F).

One of the features of the present comestible product is that it is capable of undergoing cold processing to form the final product, by techniques and in apparatus reserved for hard candy formulations. In accordance herewith, it has been found that cold processing may be successfully utilized when the mixture is agitated, as by beating for a period of at least 7 minutes following the addition of the fat or oil component. This additional agitation appears to impart improved integrity to the mass that facilitates continuous processing by such techniques without adhesion to apparatus, jamming or product disintegration.

The mixture is thereafter further beaten until the temperature thereof drops to just below 82.2°C (180°F), at which point any flavorings desired in the final product, may be added. This further mixture is agitated for an additional period of time and is thereafter cooled to about 76.6°C (170°F), at which point it is ready for removal from the mixer. It should be mentioned that the apparatus useful in accordance with the present invention comprises those cooking and mixing apparatus well known in the confectionery manufacturing arts, and therefore the selection of specific apparatus will be apparent to the artisan. In particular, the mixing steps described above are performed on a Hobart Mixer at a variety of mixing speeds, and the cooking of the syrup component may be performed in a Hansella Cooker. Further processing, including the mixing and kneading and ultimate forming of the final product, take place, respectively, on a cold table, a Ruffinatti Mixing Table, a conventional batch former, and an extruder-like device known as a Uniplast. All of the foregoing pieces of equipment are commercially available by the names designated above, and do not per se form a part of the present invention.

As mentioned, the mixture having cooled to about 76.6°C (170°F) is thereafter further cooled and kneaded to a temperature of at least below 54°C (130°F). Specifically, the mixture is transferred to a cold table which is maintained at a temperature of about 21.1°C (70°F) and is permitted to reside on the cold table until a "skin" forms thereon, and until the mixture drops in temperature to between 62.7°C (145°F) to about 71.1°C (160°F). Thereafter, the mixture is transferred to a Ruffinatti Mixing Table, which may, for example, be maintained at a temperature of about 20°C (68°F). The table includes reciprocating arms with shovel-like ends to knead the mixture. The mixture remains on the Ruffinatti Mixing Table until the temperature thereof drops below 54°C (130°F), and preferably within a range of about 43.3°C (110°F) to about 47.2°C (117°F). Generally, the residence time of the mixture on the Ruffinatti Mixing Table is on the order of about 10 to 15 minutes.

After the mixture has attained the aforementioned lower temperature, it is transferred to the extruder-like Uniplast, from which it is cold formed into a strand which is then run through the batch former to punch out discrete tablets or droplets of the final product. Naturally, a variety of final forming processes may be utilized, depending upon the shape and size of the final product as desired. The batch former performs the final shaping operation in a cold room held at a temperature of between 11.7 to 21.1°C (53 to 70°F).

One of the features of the present method is that these final forming operations may be performed with the present composition. That is, such final forming operations are those usually performed in the manufacture of hard candy, where the material is sufficiently cohesive and dense to permit extrusion and cutting to length to occur without fracture or disintegration of the batch.

The comestible product and associated method of the present invention will be better illustrated from a

5

consideration of the following examples, in which the specific gravity of each frappé component was at least 1.0.

Examples 1—12

The following formulations were prepared in accordance with the process parameters discussed above. The individual formulations of the frappés and the bob syrups, as well as the cook temperatures at which the bob syrup was cooked, are set forth serially in tabular form, below.

TABLE I—Frappé compositions

| Example No. | Ingredient | % By weight of frappé |
|---|---|---|
| 1 | Egg albumen | 5.8 |
| | Fine granular sugar | 21.5 |
| | Water | 21.5 |
| | Antacid* | 51.2 |
| 2 | Egg albumen | 5.8 |
| | Fine granular sugar | 21.5 |
| | Water | 21.5 |
| | Calcium carbonate | 51.2 |
| 3—5 | Egg albumen | 1.3 |
| | Corn syrup | 28.6 |
| | Liquid sugar | 37.2 |
| | Antacid** | 32.2 |
| | Titanium dioxide | .54 |
| 6—10 | Egg albumen | 1.28 |
| | Corn syrup | 32.70 |
| | Invert sugar | 33.24 |
| | Antacid** | 32.25 |
| | Titanium dioxide | .54 |
| 11 | Egg albumen | 1.23 |
| | Corn syrup | 62.0 |
| | Water | 44.18 |
| | Antacid** | 32.02 |
| | Titanium dioxide | .57 |
| 12 | Egg albumen | 2.8 |
| | Milk protein (casein) | 2.8 |
| | Fine granular sugar | 20.5 |
| | Water | 20.5 |
| | Calcium carbonate | 53.4 |

\* Antacid mixture of hydroxymagnesium aluminum sulfate and dialuminum sodium carbonate.
\** Co-dried gel of magnesium carbonate and aluminum hydroxide.

The above frappé formulations were prepared into final products by combination with a series of syrup components. The components and their percentages, cooking temperatures of the syrup components and proportions of the frappé component to syrup component are set forth in Table II, below.

TABLE II
Syrup component

| Example No. | % Corn syrup | % Sugar | % Starch | Cooking temperature (°F) | Cooking vacuum | % Frappé | % Syrup |
|---|---|---|---|---|---|---|---|
| 1 | 47.2 | 52.7 | 3 | 248 | —— | 25 | 75 |
| 2 | 46.1 | 52.9 | 3 | 248 | —— | 18 | 82 |
| 3 | 75.2 | 24.8 | 3 | 280 | —— | 38.1 | 61.9 |
| 4 | 57.8 | 42.2 | 3 | 280 | —— | 38.1 | 61.9 |
| 5 | 57.8 | 42.2 | 3 | 270 | —— | 38.1 | 61.9 |
| 6 | 65.6 | 34.4 | 3 | 280 | —— | 38.2 | 61.8 |
| 7 | 75.3 | 24.7 | 3 | 280 | —— | 38.2 | 61.8 |
| 8 | 70.5 | 29.5 | 3 | 280 | 10″ (25.4 cm) | 38.2 | 61.8 |
| 9 | 70.5 | 29.5 | 3 | 280 | 5″ (12.7 cm) | 38.2 | 61.8 |
| 10 | 75.3 | 24.7 | 3 | 280 | 10″ (25.4 cm) | 38.2 | 61.8 |
| 11 | 65.6 | 34.4 | 3 | 280 | 10″ (25.4 cm) | 38.2 | 61.8 |
| 12 | 47.4 | 52.6 | 3 | 274 | —— | 26.5 | 73.5 |

## 0 075 443

**Claims**

1. A chewable comestible product, which comprises:—
(1) from 10% to 38.2% of a frappé component having a specific gravity of at least 1.0 and comprising:
    (a) at least one whipping agent present in an amount of from 1.0% to 12% by weight of the frappé component,
    (b) corn syrup in an amount of up to 92% by weight of the frappé component,
    (c) sugar in an amount of up to 55% by weight of the frappé component,
    (d) water in an amount of from 4% to 45% by weight of the frappé component, and
    (e) an antacid compound in an amount of from 30% to 55% by weight of the frappé component; and
(2) a syrup component comprising corn syrup and at least one material selected from sugar, water, starch and mixtures thereof, the syrup component comprising at least the majority of the remainder of the comestible product.

2. A product according to Claim 1, wherein the frappé component comprises:
at least one whipping agent in an amount of from 1.0% to 9% by weight of the frappé component;
corn syrup in an amount of up to 80% by weight of the frappé component;
sugar in an amount of up to 40% by weight of the frappé component;
water in an amount of from 4% to 25% by weight of the frappé component; and
an antacid compound present in an amount of from 30 to 55% by weight of the frappé component.

3. A product according to Claim 1 or 2, wherein the antacid is selected from hydroxymagnesium aluminium sulphate; dialuminium sodium carbonate; calcium carbonate; sodium bicarbonate; aluminium hydroxide, magnesium hydroxide, magnesium carbonate, a co-dried gel of magnesium carbonate and aluminium hydroxide; and mixtures thereof.

4. A product according to Claim 1, 2 or 3, wherein the antacid comprises a co-dried gel of magnesium carbonate and aluminium hydroxide.

5. A product according to any preceding claim, wherein the antacid compound has a particle size ranging from 1.0 to 1.5 μm (microns).

6. A product according to any preceding claim, wherein the whipping agent is selected from egg albumen, gelatin, milk protein, vegetable protein, and mixtures thereof.

7. A product according to any preceding claim, wherein the sugar is selected from invert sugar, liquid sugar, fine granulated sugar, and mixtures thereof.

8. A product according to any preceding claim, wherein the frappé component possesses a specific gravity ranging from 1.0 to 1.6.

9. A product according to any preceding claim, wherein the finally prepared product possesses a specific gravity ranging from 1.1 to 1.6.

10. A product according to any preceding claim, which further includes at least one material selected from colourants, flavouring, oils, preservatives, medicaments, and mixtures thereof.

11. A process for producing a chewable comestible product according to any one of Claims 1 to 10, which process comprises:
(A) preparing a frappé component having a specific gravity of at least 1.0, the frappé component having the composition defined as (a) to (e) in claim 1;
(B) preparing a syrup component comprising corn syrup and at least one material selected from sugar, water, starch, and mixtures thereof;
(C) slowly adding the syrup component to the frappé component under agitation and at an elevated temperature of at least 79.4°C (175°F);
(D) mixing the frappé component and the syrup component at a temperature of at least 76.6°C (170°F);
(E) cooling and kneading the mixture of Step D to a temperature of no higher than 54°C (130°F); and
(F) forming the cooled mixture into the comestible product.

12. A process according to Claim 11, wherein the ingredients of the frappé component are mixed for a period of time sufficient to form a hydrated mixture.

13. A process according to claim 12, wherein the hydrated mixture is further agitated and brought to a temperature of approximately 98.8°C (210°F).

14. A process according to Claim 11, 12 or 13, wherein all of the ingredients of the frappé component excepting the antacid are first combined into an initial mixture under agitation and heat, and the antacid is thereafter added to the initial mixture.

15. A process according to any one of Claims 11 to 14, wherein the syrup component comprises a mixture of corn syrup, sugar and water, that is prepared by heating to a temperature of from 115°C to 138°C (240°F to 280°F).

16. A process according to any one of Claims 11 to 15, wherein the syrup component is added to the frappé component at a temperature of from 90°C to 93°C (195°F to 200°F).

17. A process according to Claim 16, wherein the syrup component and the frappé component are agitated after the addition for a period of time sufficient for the temperature of the resulting mixture to drop to approximately 87°C (190°F).

18. A process according to any one of Claims 11 to 16, wherein, during the mixing of Step D, there is

8

# 0 075 443

added to the Step D mixture, one or more material selected from animal and vegetable fats, and oils, derivatives thereof, preservatives, and mixtures thereof.

19. A process according to Claim 18, wherein said material is added in an amount of up to 7.0% by weight of the comestible product.

20. A process according to Claim 18 or 19, wherein the mixture is thereafter agitated until the temperature thereof drops to the range from 85°C to 83°C (185°F to 180°F), at least one flavouring agent is then added thereto, and the mixture is thereafter further agitated until the temperature thereof drops to approximately 76.5°C (170°F).

21. A process according to Claim 18, 19 or 20 wherein the mixture is thereafter agitated for at least 7 minutes.

22. A process according to any one of Claims 11 to 21, wherein the mixture is kneaded and cooled to a temperature of from 43°C to 47°C (110°F to 117°F).

23. A process according to any one of Claims 11 to 22, wherein the forming of Step F is effected by cold forming at a temperature below 43°C (110°F).

24. A process according to any one of Claims 11 to 23, wherein, in Step F, the mixture is extruded and cut into discrete shapes.

## Patentansprüche

1. Kaufähiges, eßbares Produkt, gekennzeichnet durch:
1. 10—38,2% einer Frappé-Komponente eines spezifischen Gewichts von mindestens 1,0 aus:
a) mindestens einem Schlagmassemittel in einer Menge von 1,0—12 Gew.-% oder Frappé-Komponente,
b) Maissirup in einer Menge bis zu 92 Gew.-% der Frappé-Komponente,
c) Zucker in einer Menge bis zu 55 Gew.-% der Frappé-Komponente,
d) Wasser in einer Menge von 4—45 Gew.-% der Frappé-Komponente und
e) einem säurebindenden Mittel, in einer Menge von 30—55 Gew.-% der Frappé-Komponente und
2. Eine Sirupkomponente aus Maissirup und mindestens einem Material, ausgewählt aus Zucker, Wasser und/oder Stärke, wobei die Sirupkomponente zumindest den Hauptteil des Rests des eßbaren Produkts ausmacht.

2. Produkt nach Anspruch 1, dadurch gekennzeichnet, daß die Frappé-Komponente aus:
mindestens einem Schlagmassemittel in einer Menge von 1,0—9 Gew.-% der Frappé-Komponente,
Maissirup in einer Menge von bis zu 80 Gew.-% der Frappé-komponente,
Zucker in einer Menge bis zu 40 Gew.-% der Frappé-Komponente,
Wasser in einer Menge von 4—25 Gew.-% der Frappé-Komponente und einer säurebindenden Verbindung in einer Menge von 30—55 Gew.-% der Frappé-Komponente besteht.

3. Produkt nach Anspruch 1 oder 2, dadurch gekennzeichnet, daß die säurebindende Verbindung aus Hydroxymagnesiumaluminiumsulfat, Dialuminiumnatriumcarbonat, Calciumcarbonat, Natriumbicarbonat, Aluminiumhydroxid, Magnesiumhydroxid, Magnesiumcarbonat, einem gemeinsam getrockneten Gel aus Magnesiumcarbonat und Aluminiumhydroxid oder einer Mischung derselben besteht.

4. Produkt nach Ansprüchen 1, 2 oder 3, dadurch gekennzeichnet, daß die säurebindende Verbindung aus einem gemeinsam getrockneten Gel aus Magnesiumcarbonat und Aluminiumhydroxid besteht.

5. Produkt nach einem der vorhergehenden Ansprüche, dadurch gekennzeichnet, daß die säurebindende Verbindung eine Teilchengröße von 1,0—1,5 μm (Mikron) aufweist.

6. Produkt nach einem der vorhergehenden Ansprüche, dadurch gekennzeichnet, daß das Schlagmassemittel aus Eialbumen, Gelatine, Milchprotein, Pflanzenprotein oder einer Mischung hiervon besteht.

7. Produkt nach einem der vorhergehenden Ansprüche, dadurch gekennzeichnet, daß der Zucker aus Invertzucker, flüssigem Zucker, feinkörnigem Zucker oder einer Mischung hiervon besteht.

8. Produkt nach einem der vorhergehenden Ansprüche, dadurch gekennzeichnet, daß die Frappé-Komponente ein spezifisches Gewicht von 1,0—1,6 besitzt.

9. Produkt nach einem der vorhergehenden Ansprüche, dadurch gekennzeichnet, daß es in fertigem Zustand ein spezifisches Gewicht von 1,1—1,6 aufweist.

10. Produkt nach einem der vorhergehenden Ansprüche, dadurch gekennzeichnet, daß es zusätzlich mindestens ein Material, ausgewählt aus Farbstoffen, Geschmacksstoffen, Ölen, Konservierungsmittel, Medikamenten und Mischungen hiervon, enthält.

11. Verfahren zur Herstellung eines kaufähigen, eßbaren Produkts nach einem der Ansprüche 1 bis 10, dadurch gekennzeichnet, daß man
A) ein Frappé-Komponente einer entsprechend (a) bis (e) von Anspruch 1 definierten Zusammensetzung und eines spezifischen Gewichts von mindestens 1,0 zubereitet;
B) eine Sirupkomponente aus Maissirup und mindestens einem Material, ausgewählt aus Zucker, Wasser, Stärke und Mischungen hiervon, zubereitet;
C) langsam die Sirupkomponente unter Bewegen und bei erhöhter Temperatur von mindestens 79,4°C (175°F) zu der Frappé-Komponente zufügt;
D) die Frappé-Komponente und die Sirupkomponente bei einer Temperatur von mindestens 76,6°C (170°F) mischt;

**0 075 443**

E) das Gemisch von Stufe D unter Kneten auf eine Temperatur von nicht höher als 54°C (130°F) abkühlt und

F) das gekühlte Gemisch zu dem eßbaren Produkt ausformt.

12. Verfahren nach Anspruch 11, dadurch gekennzeichnet, daß man die Bestandteile der Frappé-Komponente eine zur Bildung eines hydratisierten Gemischs ausreichende Zeit lang mischt.

13. Verfahren nach Anspruch 12, dadurch gekennzeichnet, daß man das hydratisierte Gemisch weiterbewegt und auf eine Temperatur von etwa 98,8°C (210°F) bringt.

14. Verfahren nach Ansprüchen 11, 12 oder 13, dadurch gekennzeichnet, daß man zunächst die gesamten Bestandteile der Frappé-Komponente mit Ausnahme der säurebindenden Verbindung unter Bewegen und Erwärmen zu einem Primärgemisch vereinigt und danach die säurebildende Verbindung zu dem Primärgemisch hinzufügt.

15. Verfahren nach einem der Ansprüche 11 bis 14, dadurch gekennzeichnet, daß man die ein Gemisch aus Maissirup, Zucker und Wasser enthaltende Sirupkomponente durch Erwärmen auf eine Temperatur von 115—138°C (240—280°F) zubereitet.

16. Verfahren nach einem der Ansprüche 11 bis 15, dadurch gekennzeichnet, daß man die Sirupkomponente der Frappé-Komponente bei einer Temperatur von 90—93°C (195—200°F) zusetzt.

17. Verfahren nach Anspruch 16, dadurch gekennzeichnet, daß man nach beendeter Zugabe die Sirupkomponente und die Frappé-Komponente so lange bewegt, bis die Temperatur des gebildeten Gemischs auf etwa 87°C (190°F) gefallen ist.

18. Verfahren nach einem der Ansprüche 11 bis 16, dadurch gekennzeichnet, daß man während des Mischens in Stufe D dem Gemisch der Stufe D ein oder mehrere Material(ien), ausgewählt aus tierischen und pflanzlichen Fetten und Ölen, deren Derivaten, Konservierungsmitteln und Mischungen hiervon, einverleibt.

19. Verfahren nach Anspruch 18, dadurch gekennzeichnet, daß man das Material in einer Menge von bis zu 7,0 Gew.-% des eßbaren Produkts zusetzt.

20. Verfahren nach Ansprüchen 18 oder 19, dadurch gekennzeichnet, daß man danach das Gemisch bewegt, bis seine Temperatur auf 85—83°C (185—180°F) gefallen ist, dann mindestens einen Geschmacksstoff zusetzt und schließlich das Gemisch weiterbewegt, bis dessen Temperatur auf etwa 76,5°C (170°F) gefallen ist.

21. Verfahren nach Ansprüchen 18, 19 oder 20, dadurch gekennzeichnet, daß man das Gemisch danach mindestens 7 min lang bewegt.

22. Verfahren nach einem der Ansprüche 11 bis 21, dadurch gekennzeichnet, daß man das Gemisch unter Kneten auf eine Temperatur von 43—47°C (110—117°F) abkühlt.

23. Verfahren nach einem der Ansprüche 11 bis 22, dadurch gekennzeichnet, daß man das Ausformen in Stufe F durch Kaltformen bei einer Temperatur unterhalb von 43°C (110°F) durchführt.

24. Verfahren nach einem der Ansprüche 11 bis 23, dadurch gekennzeichnet, daß man in Stufe F das Gemisch extrudiert und zu einzelnen Formlingen zerschneidet.

**Revendications**

1. Produit comestible qui se mâche et comprend:

(a) de 10 à 38,2% de mousse dont la densité spécifique est au moins égale à 1,0 et comprenant:

(b) au moins un agent à fouetter présent en quantité représentant de 1,0 à 12% en poids de la mousse;

(c) du sirop de maïs en quantité atteignant jusqu'à 92% du poids de la mousse;

(d) du sucre en quantité atteignant jusqu'à 55% du poids de la mousse;

(e) de l'eau en quantité représentant de 4 à 45% du poids de la mousse; et

(f) un agent anti-acide en quantité de 30 à 35% du poids de la mousse; et

(g) un sirop comprenant du sirop de maïs et au moins une substance choisi dans la liste contenant le sucre, l'eau, l'amidon et leurs mélanges, le sirop constituant au moins la majorité du reste du produit comestible.

2. Produit selon la revendication 1, dans lequel la mousse comprend:

— au moins un agent à fouetter en quantité de 1,0 à 9% en poids par rapport au composant sous forme de mousse;

— du sirop de maïs dont le poids atteint jusqu'à 80% du poids de la mousse;

— un poids de sucre atteignant jusqu'à 40% du poids de la mousse;

— de l'eau en quantité représentant de 4 à 25% du poids de la mousse; et

— un agent anti-acide présent en quantité représentant de 30 à 35% du poids de la mousse.

3. Produit selon la revendication 1 ou 2, dans lequel l'agent anti-acide est choisi dans la liste contenant le sulfate d'hydroxyde de magnésium-aluminium, le carbonate de dialuminium-sodium, le carbonate de calcium, le bicarbonate de sodium, l'hydroxyde d'aluminium, l'hydroxyde de magnésium, le carbonate de magnésium, un gel co-séché de carbonate de magnésium et d'hydroxyde d'aluminium et leurs mélanges.

4. Produit selon la revendication 1, 2 ou 3, dans lequel l'agent anti-acide comprend un gel so-séché de carbonate de magnésium et d'hydroxyde d'aluminium.

10

5. Produit selon l'une quelconque des revendications précédentes, dans lequel le composé anti-acide est sous forme de particules de dimension comprise entre 1,0 et 1,5 μm (microns).

6. Produit selon l'une quelconque des revendications précédentes, dans lequel l'agent à fouetter est choisi dans la liste contenant l'albumine d'oeuf, la gélatine, la protéine de lait, une protéine végétale et leurs mélanges.

7. Produit selon l'une quelconque des revendications précédentes, dans lequel le sucre est choisi dans la liste contenant le sucre inverti, le sucre liquide, le sucre granulé fin et leurs mélanges.

8. Produit selon l'une quelconque des revendications précédentes, dans lequel la mousse possède un poids spécifique compris entre 1,0 et 1,6.

9. Produit selon l'une quelconque des revendications précédentes, dans lequel le produit finalement préparé possède un poids spécifique compris entre 1,1 et 1,6.

10. Produit selon l'une quelconque des revendications précédentes, qui comprend encore au moins une substance choisie dans la liste contenant les colorants, les parfums, les huiles, les agents de préservation, les médicaments et leurs mélanges.

11. Procédé de préparation d'un produit comestible qui se mâche selon l'une quelconque des revendications 1 à 10, consistant:

(A) à préparer une mousse dont le poids spécifique est au moins égale à 1,0, la mousse ayant la composition définie de (a) à (e) dans la revendications 1;

(B) à préparer un sirop comprenant du sirop de maïs et moins une substance choisie dans la liste contenant le sucre, l'eau, l'amidon et leurs mélanges;

(C) à ajouter lentement le sirop à la mousse sous agitation et à une température élevée au moins égale à 79,4°C (175°F);

(D) à mélanger la mousse et le sirop à une température au moins égale à 76,6°C (130°F); et

(F) à mettre le mélange refroidi sous forme de produit comestible.

12. Procédé selon la revendication 11, dans lequel les ingrédients de mousse sont mélangés pendant une période de temps suffisante pour obtenir un mélange hydraté.

13. Procédé selon la revendication 12, dans lequel le mélange hydraté est encore agité et porté à une température d'approximativement 98,8°C (110°F).

14. Procédé selon l'une quelconque des revendications 11, 12 ou 13, dans lequel tous les ingrédients de la mousse, sauf l'agent anti-acide, sont tout d'abord réunis dans un mélange initial en chauffant sous agitation et l'agent anti-acide est ajouté ensuite au mélange initial.

15. Procédé selon l'une quelconque des revendications 11 à 14, dans lequel le sirop comprend un mélange de sirop de maïs, de sucre et d'eau, qui est préparé par chauffage à une température comprise entre 115 et 138°C (240°F à 280°F).

16. Procédé selon l'une quelconque des revendications 11 à 15, dans lequel le sirop est ajouté à la mousse à une température de 90 à 93°C (195°F à 200°F).

17. Procédé selon la revendication 16, dans lequel le sirop et la mousse sont agités après addition pendant une période de temps suffisante pour que la température du mélange qui en résulte tombe approximativement à 87°C (190°F).

18. Procédé selon l'une quelconque des revendications 11 à 16, dans lequel, pendant le mélange de l'étape D, on ajoute au mélange de l'étape D une ou plusieurs substances choisies dans la liste contenant des matières grasses animales et végétales et des huiles, leurs dérivés, des agents de préservation et leurs mélanges.

19. Procédé selon la revendication 18, dans lequel ladite substance est ajoutée en quantité représentant jusqu'à 7,0% en poids du produit comestible.

20. Procédé selon l'une quelconque des revendications 18 ou 19, dans lequel le mélange est ensuite agité jusqu'à ce que sa température tombe dans l'intervalle de 85°C à 83°C (185°F à 180°F), ce après quoi, on ajoute alors au moins un parfum et agite encore ensuite le mélange jusqu'à ce que sa température tombe approximativement à 76,5°C (170°F).

21. Procédé selon l'une quelconque des revendications 18, 19 ou 20, dans lequel le mélange est ensuite agité pendant au moins 7 minutes.

22. Procédé selon l'une quelconque des revendications 11 à 21, dans lequel le mélange est pétri et refroidi à une température de 43°C à 47°C (110°F à 117°F).

23. Procédé selon l'une quelconque des revendications 11 à 12, dans lequel la mise en forme de l'étape F s'effectue par mise en forme à froid à une température inférieure à 43°C (110°F).

24. Procédé selon l'une quelconque des revendications 11 à 23, dans lequel, dans l'étape F, le mélange est extrudé et découpé en formes discrète.